# EUROPEAN PATENT SPECIFICATION

(11) **EP 3 493 045 B1**
(45) Date of publication and mention of the grant of the patent: **24.06.2020**
(21) Application number: 17204608.8
(22) Date of filing: 30.11.2017
(51) Int. Cl.: G06F 3/0488

(54) **PROTECTION METHOD AND PROTECTION UNIT**
SCHUTZVERFAHREN UND SCHUTZEINHEIT
PROCÉDÉ DE PROTECTION ET UNITÉ DE PROTECTION

(43) Date of publication of application: 05.06.2019
(73) Proprietor: Vestel Elektronik Sanayi ve Ticaret A.S., 45030 Manisa (TR)
(72) Inventor: Cubukcu, Baran, 45030 Manisa (TR)
(74) Representative: Ascherl, Andreas

(56) References cited:
- US-A1- 2004 222 973
- US-A1- 2007 035 524
- US-A1- 2008 231 604
- US-A1- 2009 265 644
- US-A1- 2010 007 620
- US-A1- 2014 152 583

## Description

### TECHNICAL FIELD

The invention relates to a protection method for a touch panel device. Further, the invention relates to a protection unit for a touch panel device.

### BACKGROUND

Although applicable to any touch panel device, the present invention will mainly be described in conjunction with touch panel devices in consumer electronic devices, like e.g. smartphone and tablet PCs.

In modern consumer devices like e.g. smartphones usually a display with a touch panel is used to display information to the user and receive user input. This combination of a display with a touch panel may also be called a touch screen.

The touch panel usually comprises a matrix of touch sensors. These sensors are exposed to wear and may therefore eventually fail. The wear a touch sensor suffers may e.g. be influenced by the number of user activations of the respective sensor.

Since touch screens are usually provided to show the user the user interface of the operating system of the electronic device, input elements will most of the time be provided at the same positions. Further, a user may use applications like e.g. games that require a lot of actuations of the same input element, e.g. a "shoot button" or a "directional pad". The more a user plays such games the more actuations the respective touch sensors will suffer.

Therefore, the user interface of the operating system and applications like e.g. games, may accelerate wear and therefore failure of the touch sensors.

Accordingly, there is a need for protecting touch panel devices in electronic devices.

US2008231604 discloses a method for extending the life of touch screens, whereby a signature area and virtual keypad, among other display elements, are displayed in more than one location on a touch screen display. As a result, wear and tear may be strategically distributed evenly across the touch screen, instead of isolated to fixed locations, thus increasing the touch screen's useful lifetime.

### SUMMARY OF THE INVENTION

The present invention provides a protection method with the features of claim 1 and a protection unit with the features of claim 10.

Accordingly, it is provided:
A protection method for a touch panel device, the protection method comprising monitoring for every position on the touch panel device a number of user input actions and surface area sizes of the user input actions, and moving input elements that are displayed on the touch panel device from their original position to an alternative position based on the monitored numbers and surface area sizes.

Further, it is provided:
A protection unit for a touch panel device, the protection unit comprising an input control unit configured to monitor for every position on the touch panel device a number of user input actions and surface area sizes of the user input actions, and a display control unit configured to move input elements that are displayed on the touch panel device from their original position to an alternative position based on the monitored numbers and surface area sizes.

The present invention is based on the finding that the wear or degradation of the sensing elements of a touch panel device is influenced by the number of actuations by the user. Further, the present invention acknowledges that with every actuation an area of a different size, i.e. number of sensing elements, of the touch panel may be actuated. The size of the area may e.g. depend on the size of the user's finger, the pressure that the user applied and so on.

The present invention therefore provides a protection method for touch panels that takes into account the number of actuations as well as the surface area sizes of the user actuations, i.e. the size of the area that is affected by the respective user actuation.

To protect the single touch sensors of the touch panel it is necessary to guide the user input actions to other touch sensors of the touch panel. Therefore, the method comprises monitoring for every position on the touch panel, e.g. for every input sensor of the touch panel, the number of user input actions and the surface area sizes of these user input actions. User input actions may refer to a single touching of the surface of the touch panel by a user. The user may e.g. touch the surface with his finger or with a respective pen or digitizer. The term "surface area size" refers to the size of the area where the finger touches the surface of the touch panel. This also implies that more than one positions on the surface of the touch panel or touch sensors of the touch panel may be affected by a single user input action. The respective number may therefore be increased for all affected positions or touch sensors.

In order to protect the touch panel, the method uses the acquired information to shift or move the input elements that are displayed on the touch panel. Moving the input elements will lead the user to touch other positions of the touch panel with his user input actions. To this end, the single input elements will be moved from their original position to an alternative position. The alternative position is determined based on the monitored numbers and the monitored surface area sizes. This allows shifting the input elements enough, such that the user will hit other input elements with his user input actions.

Moving may e.g. be performed as relative movement starting from the original position and the coordinates or movement vectors may be provided in pixels.

It is understood, that the method according to the present invention may e.g. be implemented in a software application that is executed by an operating system that uses the touch panel as user interface. Such a software application may e.g. be part of user selectable applications, i.e. the functions of the method according to the present invention are implemented individually in every application. In addition or as alternative, the functionality of the method according to the present invention may be implemented as part of the operating system, e.g. as a function of the library of the operating system that is responsible for drawing the user interface on the touch panel and providing the input elements. Such libraries may e.g. be queried or called by applications to draw the user interface.

Further embodiments of the present invention are subject of the further subclaims and of the following description, referring to the drawings.

In an embodiment, the protection method may comprise for every position on the touch panel device comparing the monitored number with a predetermined threshold value and moving the input elements at the respective position to the alternative position if the monitored number is larger than the threshold value.

The wear of the touch panel may be uncritical under normal operating conditions, i.e. when a user uses the operating system's interface and some applications, like e.g. a web browser. However, some applications, like e.g. games may lead to an increased amount of user actuations on the same positions of the touch panel. To reduce the irritation for the user that is caused by shifting the input elements, the threshold value may be provided. Moving the input elements may then only be performed, if the respective position of the touch panel is hit more times than defined by the threshold value. The threshold value may e.g. be 100, 1000, 10000 or any other value that may be chosen according to the hardware of the respective touch panel.

In another embodiment, moving may comprise displacing the input elements by a number of pixels that is at least as large as an average of the monitored surface area sizes or that is at least as large as a minimum size of the monitored surface area sizes or that is at least as large as a maximum size of the monitored surface area sizes.

Stressed positions on the surface of the touch panel should not be used by the user for performing input actions. The alternative positions of the respective input elements therefore have to be spaced apart from the original positions such that the user input actions at the new or alternative position do not overlap with the old or original position.

Using the average or minimum size may reduce the distance between the original and the alternative position, thereby reducing user irritation. A little overlap of the user input actions at the alternative position with the original position may be acceptable, especially since the pressure at the borders of the respective area is smaller than in the center of the respective area.

Using the maximum size in contrast makes sure that no overlap exists between the user input actions at the alternative position and the original position.

In an embodiment, the protection method may comprise increasing the displacement between the original position and the alternative position of a respective one of the input elements if after moving the respective input element at least some of the same positions as prior to moving the input element are hit by user input actions.

After moving or shifting a user input, it is possible to further monitor the respective positions. It may therefore easily be detected if the touch panel is still affected by user inputs at the original position of the user input. If this is the case, it is possible to increase the distance between the original position and the alternative position. It is further possible to monitor the frequency of the user input actions at the original position. If the frequency is decreased below a threshold value after moving the respective input element to the alternative position, the distance may e.g. be kept constant.

For example, if the alternative position is shifted 5 pixels from the original position and a finger when performing a user input action on the alternative position still hits the original position, i.e. touch sensors that where hit when the input element was at the original position, the distance may be increased. The increase may e.g. be performed gradually, e.g. pixel by pixel, or with a step of more than one pixel.

In a further embodiment, moving may comprise shifting the alternative position in a predetermined distance around the original position in predetermined time intervals.

If the position of an input element is shifted once, it may be assumed that the input element will also receive an increased amount of user input actions at the alternative position. The method may therefore comprise automatically shifting the alternative position in predetermined time intervals. A user input may e.g. be shifted once in a week, once in a month for example or after the monitored number reaches the threshold value again.

If for example an input button is moved 3 pixels left, a week later it may be shifted again 3 pixels right back to its original position, after one more week it may be shifted 3 pixels right of the original position, and a week later it may be shifted 3 pixels left again back to its original position. Shifting up and down is also possible. Further, the shifting pattern may be arbitrarily chosen, e.g. up, left, right, down, original position.

In an embodiment, the protection method may comprise for input elements that are arranged in rows and/or columns, adaptively shifting all input elements in the respective row and/or column if one input element of the respective row and/or column is moved to the alternative position.

Adaptively shifting refers to shifting all elements on a row or column or a matrix such that the distances between the input elements are leveled or averaged. For example four soft buttons may be provided in a row on the touch panel equally distanced apart from each other. If the first or left button is excessively used by a user, this button may be shifted, e.g. to the right by X pixels. This means the left button will now move near the second button from the left. This will lead to an asymmetric arrangement of the input elements.

Therefore, the other soft buttons in the row may be adaptively shifted. This means that the second button from the left will be shifted by X/2, the second button from the right will be shifted by X/3 and the right button may be shifted by X/4. The same scheme may be applied in the vertical direction or for a matrix in both directions.

Adaptively shifting may in any case be performed according to the system's layout or requirements. For example, the second button may not be shifted by X/2 but could be shifted by X/4, the third button by X/8 and fourth button by X/16. The shifting distance for the single buttons may also depend on how far the next button is located from the shifted button. If for example, the first button is shifted by X and second button is 5X away from the first button, the second button could be shifted less than X/2. The same also applies to the next buttons. The exact shifting distance may be determined such that the proportions of the distances between the single buttons keep constant.

In another embodiment, for an input element with a high number of monitored inputs and another input element with a lower number of monitored inputs moving may comprise switching the positions of the two input elements.

Usually some of the input elements will be used more frequently than other input elements. Therefore, it may help to reduce the user input actions on a specific position of the touch panel, if the position of an input element that receives an increased amount of user input actions is switched with the position of an input element that receives less user input actions.

The user may however be informed about this switching of the positions and may e.g. reject or accept this measure.

In an embodiment, the protection method may comprise for every user input action monitoring the pressure applied to the touch panel device and increasing the monitored number based on the applied pressure. In addition, a safety value, e.g. one, may be added to the monitored number if the applied pressure of a user input action is higher than a predetermined threshold value.

The amount of wear a single touch sensor of the touch panel suffers from a user input action also depends on the pressure that is applied with the user input action. If the pressure is within certain pressure limits, a typical amount of wear on the respective position may be assumed. However, if the pressure is above a predetermined threshold value, an increased wear may be assumed. To take this increased wear into account, the number of user input actions may be adapted accordingly. It is for example possible to add an additional safety value, e.g. one, to the number of user input actions if the pressure is above the threshold value. Further, more than one threshold values may be defined and the safety value may increase accordingly.

In an embodiment, the protection method may comprise analyzing the type of application that is being displayed on the touch panel device and moving the input elements according to the detected type of application.

The type of application that is executed and its user interface may significantly influence the amount and intensity of the user input actions on the touch panel.

For example, most of tablet PC and mobile phone games display buttons on the left of the touch panel for directional input and display buttons on the right of the touch panel for performing specific actions. A user will therefore be almost always pressing the same points on the touch screen while playing these kind of games.

Moving according to the application that is executed may e.g. comprise shifting the left buttons about a predetermined amount of pixels to the left and shifting the right buttons about a predetermined amount of pixels to the right, the number of pixels may depend e.g. on a detected finger size of a user and/or on the size of the section of the respective input element that is covered by the finger of the user. The movement may in any case be such that the input elements may still be adequately reached when holding the device in the typical horizontal position with two hands.

In contrast, other applications may comprise input elements at totally different positions, like e.g. browsers or e-book readers. Such applications will usually comprise input elements at the edges of the touch panel. Moving the input elements may then refer to moving the input elements on the edge of the touch panel without occluding the inner area that is used to display content.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a flow diagram of an embodiment of a protection method according to the present invention;
- Fig. 2: shows a block diagram of an embodiment of a protection unit according to the present invention;
- Fig. 3: shows block diagram of an embodiment of a protection unit according to the present invention; and
- Fig. 4: shows a diagram of a movement of possible input elements for use with the present invention.

In the figures like reference signs denote like elements unless stated otherwise.

### DETAILED DESCRIPTION OF THE DRAWINGS

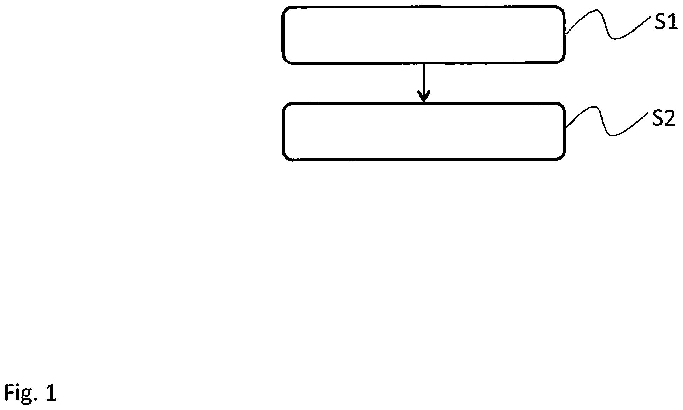

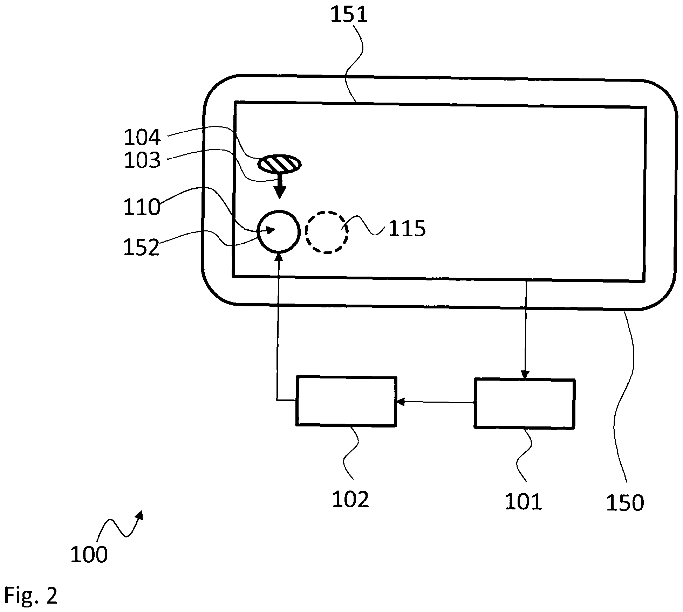

For sake of clarity in the following description of the method based Fig. 1 the reference signs used in the description of the Figs. 2 - 4 will be used.

Fig. 1 shows a flow diagram of a protection method for a touch panel device 151, 251, 351.

The protection method comprises monitoring S1 for every position on the touch panel device 151, 251, 351 a number of user input actions 103, 203 and surface area sizes 104, 204 of the user input actions 103, 203. In addition the protection method comprises moving S2 input elements 152, 252, 253, 254, 352, 353, 354, 355 that are displayed on the touch panel device 151, 251, 351 from their original position 110, 310, 311, 312, 313 to an alternative position 115, 215, 216, 217, 315, 316, 317, 318 based on the monitored numbers and surface area sizes 104, 204.

The protection method may further comprise for every position on the touch panel device 151, 251, 351 comparing the monitored number with a predetermined threshold value. The threshold value may be seen as a use level limit and indicates if it is necessary at all to move the respective input elements 152, 252, 253, 254, 352, 353, 354, 355. Moving the input elements 152, 252, 253, 254, 352, 353, 354, 355 at the respective positions to the alternative position 115, 215, 216, 217, 315, 316, 317, 318 may then e.g. be performed only if the monitored number is larger than the threshold value.

Moving S2 may comprise displacing the input elements 152, 252, 253, 254, 352, 353, 354, 355 by a number of pixels that is at least as large as an average of the monitored surface area sizes 104, 204 or that is at least as large as a minimum size of the monitored surface area sizes 104, 204 or that is at least as large as a maximum size of the monitored surface area sizes 104, 204.

If after moving the respective input element 152, 252, 253, 254, 352, 353, 354, 355 at least some of the same positions as prior to moving the input element 152, 252, 253, 254, 352, 353, 354, 355 are still hit by user input actions 103, 203, the distance between the original position 110, 310, 311, 312, 313 and the alternative position 115, 215, 216, 217, 315, 316, 317, 318 may be increased. In this case the protection method may further comprise increasing the displacement between the original position 110, 310, 311, 312, 313 and the alternative position 115, 215, 216, 217, 315, 316, 317, 318 of an input element 152, 252, 253, 254, 352, 353, 354, 355.

To prevent excessive wear of the alternative position 115, 215, 216, 217, 315, 316, 317, 318, moving S2 may also comprise shifting the alternative position 115, 215, 216, 217, 315, 316, 317, 318 in a predetermined distance around the original position 110, 310, 311, 312, 313 in predetermined time intervals.

For input elements 152, 252, 253, 254, 352, 353, 354, 355 that are arranged in rows and/or columns, the protection method may comprise adaptively shifting all input elements 152, 252, 253, 254, 352, 353, 354, 355 in the respective row and/or column if one input element 152, 252, 253, 254, 352, 353, 354, 355 of the respective row and/or column is moved to the alternative position 115, 215, 216, 217, 315, 316, 317, 318.

For an input element 152, 252, 253, 254, 352, 353, 354, 355 with a high number of monitored inputs and another input element 152, 252, 253, 254, 352, 353, 354, 355 with a lower number of monitored inputs moving may comprise switching the positions of the two input elements 152, 252, 253, 254, 352, 353, 354, 355. This means that for every one of the two input elements 152, 252, 253, 254, 352, 353, 354, 355 the alternative position 115, 215, 216, 217, 315, 316, 317, 318 is defined as the original position 110, 310, 311, 312, 313 of the other input element 152, 252, 253, 254, 352, 353, 354, 355.

The protection method may comprise for every user input action 103, 203 monitoring the pressure applied to the touch panel device 151, 251, 351 and increasing the monitored number based on the applied pressure. For example a safety value may be added to the monitored number if the applied pressure of a user input action 103, 203 is higher than a predetermined threshold value.

The protection method may further comprise analyzing the type of application that is being displayed on the touch panel device 151, 251, 351 and moving the input elements 152, 252, 253, 254, 352, 353, 354, 355 according to the detected type of application.

Fig. 2 shows a block diagram of an embodiment of a protection unit 100 for protecting the touch panel device 151 of an electronic device 150. On the touch panel device 151 a single input element 152 is exemplarily shown in its original position 110. It is however understood, that any other number of input elements is also possible and that the below described principles may be applied to any number of input elements.

The protection unit 100 comprises an input control unit 101 that is coupled to the touch panel device 151. Further, the protection unit 100 comprises a display control unit 102 that is coupled to the input control unit 101 and the touch panel device 151.

The input control unit 101 monitors for every position on the touch panel device 151 a number of user input actions 103, i.e. the input control unit 101 counts the number of user input actions 103 for every position on the touch panel device 151, and especially of user input actions 104 on input elements 152 that are displayed on the touch panel device 151. The input control unit 101 further monitors the surface area sizes 104 of the user input actions 103. Since a user will probably use his finger to touch the touch panel device 151 the surface area that is affected by the single user input action 103 will be larger than a single touch sensor or sensor pixel of the touch panel device 151. The surface area size 104 therefore refers to the size of the area that a user input action 103 covers on the touch panel device 151. The input control unit 101 may e.g. store a radius and a center position or may store the individual positions, e.g. in an array, that are affected by a user input action 103.

The display control unit 102 may e.g. be a display controller of the electronic device 150 or a function of an operating system of the electronic device 150 that uses the display controller to display input element 152 in the touch panel device 151. The display control unit 102 moves the input element 152 that is displayed on the touch panel device 151 from its original position 110 to an alternative position 115based on the monitored numbers and surface area sizes 104. By moving the input element 152 to other positions than the original position 110, the touch sensor at the original position 110 may be protected from excessive use and wear.

As a measure for when to move input element 152, the display control unit 102 may e.g. compare the monitored number with a predetermined threshold value for every position on the touch panel device 151. The display control unit 102 may then e.g. only move input element 152 if the monitored number for the respective position is larger than the threshold value.

When moving the input element 152 the display control unit 102 may displace the input elements 152 by a number of pixels that is as large as or larger than an average of the monitored surface area sizes 104. As an alternative, the displacement may be as large as or larger than a minimum size of the monitored surface area sizes 104 or as large as or larger than a maximum size of the monitored surface area sizes 104.

The display control unit 102 may further increase the displacement between the original position 110 and the alternative position 115 of input element 152 if after moving the input element 152 at least some of the same positions as prior to moving the input element 152 are hit by user input actions 103.

The display control unit 102 may also shift the alternative position 115 in a predetermined distance around the original position 110 in predetermined time intervals, e.g. per day, per week or per month. The time interval may e.g. be determined by the usage of the input element 152. If input element 152 is used more than a predetermined amount (e.g. measured in activations per time interval, e.g. day, week or month), a shorter time interval for switching the position may be selected. A first amount may be determined for monthly switching, a second amount for weekly switching and a third amount for daily switching.

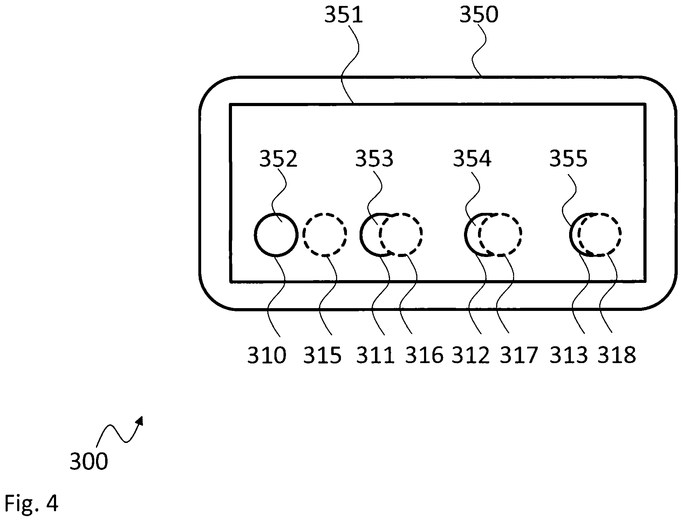

For input elements 152 that are arranged in rows, see e.g. Fig 4, and/or columns the display control unit 102 may adaptively shift all input elements 152 in the respective row and/or column if one input element 152 of the respective row and/or column is moved to the alternative position 115. For an input element 152 with a high number of monitored inputs and another input element 152 with a lower number of monitored inputs the display control unit 102 may switch the positions of the two input elements 152 instead of moving the input element 152 with a high number of monitored inputs to the respective alternative position 115.

Further, the display control unit 102 may monitor for every user input action 103 the pressure applied to the touch panel device 151 during the respective user input action 103. If the applied pressure of a user input action 103 is higher than a predetermined threshold value, the display control unit 102 may increase the monitored number based on the applied pressure. The display control unit 102 may e.g. add an additional safety value to the monitored number. Therefore, instead of increasing the number by one, the number may e.g. be increased by two, three or four or the like.

The display control unit 102 may also analyze the type of application that is being displayed on the touch panel device 151 and move the input element 152 according to the detected type of application.

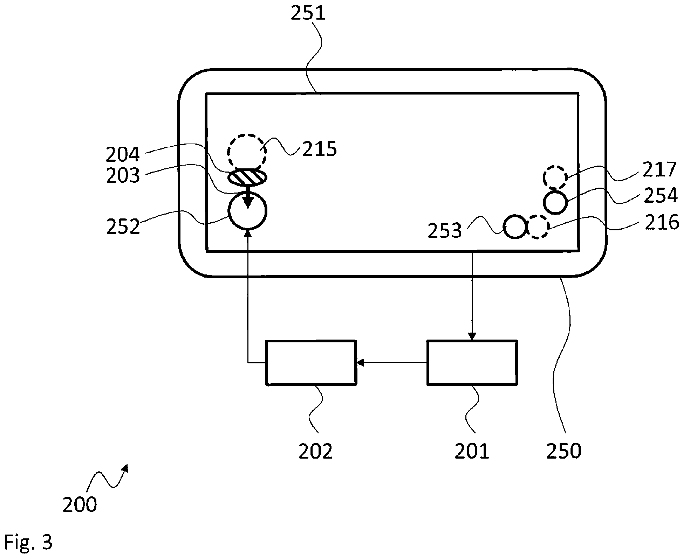

Fig. 3 shows block diagram of a protection unit 200. The protection unit 200 is based on the protection unit 100 and therefore comprises the input control unit 201 that is coupled to the touch panel device 251, and the display control unit 202 that is coupled to the input control unit 201 and to the touch panel device 251. The above explanations regarding the protection unit 100 therefore also apply to the protection unit 200.

On the touch panel device 251 the input element 252 is shown on the left section and two further input elements 253, 254 are shown on the right section of the touch panel device 251. The input element 252 may e.g. be a directional pad, while the input elements 253, 254 may be action buttons.

The display control unit 202 may e.g. analyze what type of application is being displayed on the touch panel device 251 and determine the alternative positions 215, 216, 217 accordingly. In the diagram of Fig. 3, the application may e.g. be a game and the input elements 252, 253, 254 should be reachable when holding the electronic device 250 in the vertical position as shown.

Therefore, the display control unit 202 may chose alternative positions 215, 216, 217 that are arranged on the edge areas of the touch panel device 251.

It is understood, that the input control unit 101, 201 and the display control unit 102, 202 may be implemented in hardware, software or a combination of both. The input control unit 101, 201 and the display control unit 102, 202 may e.g. be implemented as a touch panel controller and a software. The touch panel controller may e.g. transmit respective touch events to a processor of an electronic device 150, 250, 350 where the software performs the respective calculations. The same applies to the display control unit 102, 202, that may e.g. be implemented as a software and a graphics processing unit.

Fig. 4 shows a diagram of a movement of input elements 352, 353, 354, 355 that may e.g. be performed by the display control unit 102, 202.

The four input elements 352, 353, 354, 355 are arranged vertically distributed on the touch panel device 351. Assuming that the input element 352 is the most used one of the input elements 352, 353, 354, 355, the input element 352 is moved to the alternative position 315, e.g. by a distance X to the right. To provide a homogenous display, the display control unit 102, 202 may in addition to the input element 352 move the other input elements 353, 354, 355 accordingly. The input element 353 may e.g. be moved by X/2 to the right. The input element 354 may e.g. be moved by X/3 to the right, and the input element 355 may e.g. be moved by X/4 to the right.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein.

Thus, the present invention provides protection method for a touch panel device 151, 251, 351, the protection method comprising monitoring (S1) for every position on the touch panel device 151, 251, 351 a number of user input actions 103, 203 and surface area sizes 104, 204 of the user input actions 103, 203, and moving (S2) input elements 152, 252, 253, 254, 352, 353, 354, 355 that are displayed on the touch panel device 151, 251, 351 from their original position 110, 310, 311, 312, 313 to an alternative position 115, 215, 216, 217, 315, 316, 317, 318 based on the monitored numbers and surface area sizes 104, 204. Further, the present invention provides a respective protection unit 100, 200.

### List of reference signs

- 100, 200: protection unit
- 101, 201: input control unit
- 102, 202: display control unit
- 103, 203: user input action
- 104, 204: surface area sizes

- 110, 310, 311, 312, 313: original position
- 115, 215, 216, 217, 315, 316, 317, 318: alternative position

- 150, 250, 350: electronic device
- 151, 251, 351: touch panel device
- 152, 252, 253, 254, 352, 353, 354, 355: input element

- S1, S2: method steps

## Claims

1. Protection method for a touch panel device (151, 251, 351), the protection method comprising:
monitoring (S1) for every position on the touch panel device (151, 251, 351) a number of user input actions (103, 203) and surface area sizes (104, 204) of the user input actions (103, 203), and
moving (S2) input elements (152, 252, 253, 254, 352, 353, 354, 355) that are displayed on the touch panel device (151, 251, 351) from their original position (110, 310, 311, 312, 313) to an alternative position (115, 215, 216, 217, 315, 316, 317, 318) based on the monitored numbers and surface area sizes (104, 204).

2. Protection method according to claim 1, comprising for every position on the touch panel device (151, 251, 351) comparing the monitored number with a predetermined threshold value and moving the input elements (152, 252, 253, 254, 352, 353, 354, 355) at the respective position to the alternative position (115, 215, 216, 217, 315, 316, 317, 318) if the monitored number is larger than the threshold value.

3. Protection method according to any one of the preceding claims, wherein moving (S2) comprises displacing the input elements (152, 252, 253, 254, 352, 353, 354, 355) by a number of pixels that is at least as large as an average of the monitored surface area sizes (104, 204) or that is at least as large as a minimum size of the monitored surface area sizes (104, 204) or that is at least as large as a maximum size of the monitored surface area sizes (104, 204).

4. Protection method according to any one of the preceding claims, comprising increasing the displacement between the original position (110, 310, 311, 312, 313) and the alternative position (115, 215, 216, 217, 315, 316, 317, 318) of an input element (152, 252, 253, 254, 352, 353, 354, 355) if after moving the respective input element (152, 252, 253, 254, 352, 353, 354, 355) at least some of the same positions as prior to moving the input element (152, 252, 253, 254, 352, 353, 354, 355) are hit by user input actions (103, 203).

5. Protection method according to any one of the preceding claims, wherein moving (S2) comprises shifting the alternative position (115, 215, 216, 217, 315, 316, 317, 318) in a predetermined distance around the original position (110, 310, 311, 312, 313) in predetermined time intervals.

6. Protection method according to any one of the preceding claims, comprising for input elements (152, 252, 253, 254, 352, 353, 354, 355) that are arranged in rows and/or columns, adaptively shifting all input elements (152, 252, 253, 254, 352, 353, 354, 355) in the respective row and/or column if one input element (152, 252, 253, 254, 352, 353, 354, 355) of the respective row and/or column is moved to the alternative position (115, 215, 216, 217, 315, 316, 317, 318).

7. Protection method according to any one of the preceding claims, wherein for an input element (152, 252, 253, 254, 352, 353, 354, 355) with a high number of monitored inputs and another input element (152, 252, 253, 254, 352, 353, 354, 355) with a lower number of monitored inputs moving comprises switching the positions of the two input elements (152, 252, 253, 254, 352, 353, 354, 355).

8. Protection method according to any one of the preceding claims, comprising for every user input action (103, 203) monitoring the pressure applied to the touch panel device (151, 251, 351) and increasing the monitored number based on the applied pressure, especially wherein a safety value is added to the monitored number if the applied pressure of a user input action (103, 203) is higher than a predetermined threshold value.

9. Protection method according to any one of the preceding claims, comprising analyzing the type of application that is being displayed on the touch panel device (151, 251, 351) and moving the input elements (152, 252, 253, 254, 352, 353, 354, 355) according to the detected type of application.

10. Protection unit (100, 200) for a touch panel device (151, 251, 351), the protection unit (100, 200) comprising:
an input control unit (101, 201) configured to monitor for every position on the touch panel device (151, 251, 351) a number of user input actions (103, 203) and surface area sizes (104, 204) of the user input actions (103, 203), and
a display control unit (102, 202) configured to move input elements (152, 252, 253, 254, 352, 353, 354, 355) that are displayed on the touch panel device (151, 251, 351) from their original position (110, 310, 311, 312, 313) to an alternative position (115, 215, 216, 217, 315, 316, 317, 318) based on the monitored numbers and surface area sizes (104, 204).

11. Protection unit (100, 200) according to claim 10, wherein the display control unit (102, 202) is configured to compare for every position on the touch panel device (151, 251, 351) the monitored number with a predetermined threshold value and to move the input elements (152, 252, 253, 254, 352, 353, 354, 355) at the respective position to the alternative position (115, 215, 216, 217, 315, 316, 317, 318) if the monitored number is larger than the threshold value; and/or
wherein when moving input elements (152, 252, 253, 254, 352, 353, 354, 355) the display control unit (102, 202) is configured to displace the input elements (152, 252, 253, 254, 352, 353, 354, 355) by a number of pixels that is at least as large as an average of the monitored surface area sizes (104, 204) or that is at least as large as a minimum size of the monitored surface area sizes (104, 204) or that is at least as large as a maximum size of the monitored surface area sizes (104, 204); and/or wherein the display control unit (102, 202) is configured to increase the displacement between the original position (110, 310, 311, 312, 313) and the alternative position (115, 215, 216, 217, 315, 316, 317, 318) of an input element (152, 252, 253, 254, 352, 353, 354, 355) if after moving the respective input element (152, 252, 253, 254, 352, 353, 354, 355) at least some of the same positions as prior to moving the input element (152, 252, 253, 254, 352, 353, 354, 355) are hit by user input actions (103, 203).

12. Protection unit (100, 200) according to any one of the preceding claims 10 and 11, wherein when moving input elements (152, 252, 253, 254, 352, 353, 354, 355) the display control unit (102, 202) is configured to shift the alternative position (115, 215, 216, 217, 315, 316, 317, 318) in a predetermined distance around the original position (110, 310, 311, 312, 313) in predetermined time intervals.

13. Protection unit (100, 200) according to any one of the preceding claims 10 to 12, wherein for input elements (152, 252, 253, 254, 352, 353, 354, 355) that are arranged in rows and/or columns the display control unit (102, 202) is configured to adaptively shift all input elements (152, 252, 253, 254, 352, 353, 354, 355) in the respective row and/or column if one input element (152, 252, 253, 254, 352, 353, 354, 355) of the respective row and/or column is moved to the alternative position (115, 215, 216, 217, 315, 316, 317, 318).

14. Protection unit (100, 200) according to any one of the preceding claims 10 to 13, wherein for an input element (152, 252, 253, 254, 352, 353, 354, 355) with a high number of monitored inputs and another input element (152, 252, 253, 254, 352, 353, 354, 355) with a lower number of monitored inputs the display control unit (102, 202) is configured to switch the positions of the two input elements (152, 252, 253, 254, 352, 353, 354, 355).

15. Protection unit (100, 200) according to any one of the preceding claims 10 to 14, wherein the display control unit (102, 202) is configured for every user input action (103, 203) to monitor the pressure applied to the touch panel device (151, 251, 351) and to increase the monitored number based on the applied pressure, especially by adding a safety value to the monitored number if the applied pressure of a user input action (103, 203) is higher than a predetermined threshold value; and/or
wherein the display control unit (102, 202) is configured to analyze the type of application that is being displayed on the touch panel device (151, 251, 351) and to move the input elements (152, 252, 253, 254, 352, 353, 354, 355) according to the detected type of application.

## Patentansprüche

1. Schutzverfahren für ein Touchpanel-Gerät (151, 251, 351), wobei das Schutzverfahren umfasst:
Überwachen (S1) einer Anzahl von Benutzereingabeaktionen (103, 203) und Oberflächenbereichsgrößen (104, 204) der Benutzereingabeaktionen (103, 203) für jede Position auf dem Touchpanel-Gerät (151, 251, 351), und
Verschieben (S2) von Eingabeelementen (152, 252, 253, 254, 352, 353, 354, 355), die auf dem Touchpanel-Gerät (151, 251, 351) angezeigt werden, von ihrer ursprünglichen Position (110, 310, 311, 312, 313) in eine alternative Position (115, 215, 216, 217, 315, 316, 317, 318), basierend auf den überwachten Anzahlen und Oberflächenbereichsgrößen (104, 204).

2. Schutzverfahren nach Anspruch 1, umfassend für jede Position auf dem Berührungsflächengerät (151, 251, 351) das Vergleichen der überwachten Anzahl mit einem vorbestimmten Schwellenwert und das Bewegen der Eingabeelemente (152, 252, 253, 254, 352, 353, 354, 355) an der jeweiligen Position zu der alternativen Position (115, 215, 216, 217, 315, 316, 317, 318), wenn die überwachte Anzahl größer als der Schwellenwert ist.

3. Schutzverfahren gemäß einem der vorhergehenden Ansprüche, wobei das Verschieben (S2) das Verschieben der Eingabeelemente (152, 252, 253, 254, 352, 353, 354, 355) um eine Anzahl von Pixeln umfasst, die mindestens so groß ist wie ein Mittelwert der überwachten Oberflächenbereichsgrößen (104, 204) oder die mindestens so groß ist wie eine minimale Größe der überwachten Oberflächenbereichsgrößen (104, 204) oder die mindestens so groß ist wie eine maximale Größe der überwachten Oberflächenbereichsgrößen (104, 204).

4. Schutzverfahren nach einem der vorhergehenden Ansprüche, umfassend die Vergrößerung der Verschiebung zwischen der ursprünglichen Position (110, 310, 311, 312, 313) und der alternativen Position (115, 215, 216, 217, 315, 316, 317, 318) eines Eingabeelements (152, 252, 253), 254, 352, 353, 354, 355), wenn nach dem Bewegen des jeweiligen Eingabeelements (152, 252, 253, 254, 352, 353, 354, 355) zumindest einige der gleichen Positionen wie vor dem Bewegen des Eingabeelements (152, 252, 253, 254, 352, 353, 354, 355) von Benutzereingabeaktionen (103, 203) getroffen werden.

5. Schutzverfahren gemäß einem der vorhergehenden Ansprüche, wobei das Bewegen (S2) das Verschieben der alternativen Position (115, 215, 216, 217, 315, 316, 317, 318) in einem vorbestimmten Abstand um die ursprüngliche Position (110, 310, 311, 312, 313) in vorbestimmten Zeitintervallen umfasst.

6. Schutzverfahren gemäß einem der vorhergehenden Ansprüche, das für Eingabeelemente (152, 252, 253, 254, 352, 353, 354, 355), die in Zeilen und/oder Spalten angeordnet sind, ein adaptives Verschieben aller Eingabeelemente (152, 252, 253, 254 352, 353, 354, 355) in der jeweiligen Zeile und/oder Spalte umfasst, wenn ein Eingabeelement (152, 252, 253, 254, 352, 353, 354, 355) der jeweiligen Zeile und/oder Spalte in die alternative Position (115, 215, 216, 217, 315, 316, 317, 318) verschoben wird.

7. Schutzverfahren nach einem der vorstehenden Ansprüche, wobei für ein Eingabeelement (152, 252, 253, 254, 352, 353, 354, 355) mit einer hohen Anzahl von überwachten Eingängen und ein anderes Eingabeelement (152, 252, 253, 254, 352, 353, 354, 355) mit einer geringeren Anzahl von überwachten Eingängen das Bewegen ein Wechseln der Positionen der beiden Eingabeelemente (152, 252, 253, 254, 352, 353, 354, 355) umfasst.

8. Schutzverfahren gemäß einem der vorhergehenden Ansprüche, das für jede Benutzereingabeaktion (103, 203) das Überwachen des auf das Touchpanel-Gerät (151, 251, 351) ausgeübten Drucks und das Erhöhen der überwachten Anzahl basierend auf dem ausgeübten Druck umfasst, insbesondere wobei ein Sicherheitswert zu der überwachten Anzahl hinzugefügt wird, wenn der ausgeübte Druck einer Benutzereingabeaktion (103, 203) höher als ein vorbestimmter Schwellenwert ist.

9. Schutzverfahren gemäß einem der vorhergehenden Ansprüche, umfassend das Analysieren der Art der Anwendung, die auf dem Touchpanel-Gerät (151, 251, 351) angezeigt wird, und das Bewegen der Eingabeelemente (152, 252, 253, 254, 352, 353, 354, 355) entsprechend der erfassten Art der Anwendung.

10. Schutzeinheit (100, 200) für ein Touchpanel-Gerät (151, 251, 351), wobei die Schutzeinheit (100, 200) umfasst:
eine Eingabesteuereinheit (101, 201), die so konfiguriert ist, dass sie für jede Position auf dem Touchpanel-Gerät (151, 251, 351) eine Anzahl von Benutzereingabeaktionen (103, 203) und Oberflächenbereichsgrößen (104, 204) der Benutzereingabeaktionen (103, 203) überwacht, und
eine Anzeigesteuereinheit (102, 202), die so konfiguriert ist, dass sie Eingabeelemente (152, 252, 253, 254, 352, 353, 354, 355), die auf dem Touchpanel-Gerät (151, 251, 351) angezeigt werden, von ihrer ursprünglichen Position (110, 310, 311, 312, 313) in eine alternative Position (115, 215, 216, 217, 315, 316, 317, 318) auf der Grundlage der überwachten Anzahlen und Oberflächenbereichsgrößen (104, 204) bewegt.

11. Schutzeinheit (100, 200) nach Anspruch 10, wobei die Anzeigesteuereinheit (102, 202) so konfiguriert ist, dass sie für jede Position auf dem Touchpanel-Gerät (151, 251, 351) die überwachte Anzahl mit einem vorbestimmten Schwellenwert vergleicht und die Eingabeelemente (152, 252, 253, 254, 352, 353, 354, 355) an der jeweiligen Position zu der alternativen Position (115, 215, 216, 217, 315, 316, 317, 318) bewegt, wenn die überwachte Anzahl größer als der Schwellenwert ist; und/oder
wobei beim Bewegen von Eingabeelementen (152, 252, 253, 254, 352, 353, 354, 355) die Anzeigesteuereinheit (102, 202) so konfiguriert ist, dass sie die Eingabeelemente (152, 252, 253, 254, 352, 353, 354, 355) um eine Anzahl von Pixeln verschiebt, die mindestens so groß ist wie ein Durchschnitt der überwachten Oberflächenbereichsgrößen (104, 204) oder die mindestens so groß ist wie eine Mindestgröße der überwachten Oberflächenbereichsgrößen (104, 204) oder die mindestens so groß ist wie eine Maximalgröße der überwachten Oberflächenbereichsgrößen (104, 204); und/oder
wobei die Anzeigesteuereinheit (102, 202) konfiguriert ist, um die Verschiebung zwischen der ursprünglichen Position (110, 310, 311, 312, 313) und der alternativen Position (115, 215, 216, 217, 315, 316, 317, 318) eines Eingabeelements (152, 252, 253, 254, 352) zu erhöhen, 353, 354, 355), wenn nach dem Bewegen des jeweiligen Eingabeelements (152, 252, 253, 254, 352, 353, 354, 355) zumindest einige der gleichen Positionen wie vor dem Bewegen des Eingabeelements (152, 252, 253, 254, 352, 353, 354, 355) von Benutzereingabeaktionen (103, 203) getroffen werden.

12. Schutzeinheit (100, 200) nach einem der vorhergehenden Ansprüche 10 und 11, wobei beim Bewegen von Eingabeelementen (152, 252, 253, 254, 352, 353, 354, 355) die Anzeigesteuereinheit (102, 202) so konfiguriert ist, dass sie die alternative Position (115, 215, 216, 217, 315, 316, 317, 318) in einem vorbestimmten Abstand um die ursprüngliche Position (110, 310, 311, 312, 313) in vorbestimmten Zeitintervallen verschiebt.

13. Schutzeinheit (100, 200) nach einem der vorhergehenden Ansprüche 10 bis 12, wobei für Eingabeelemente (152, 252, 253, 254, 352, 353, 354, 355), die in Zeilen und/oder Spalten angeordnet sind, die Anzeigesteuereinheit (102, 202) so konfiguriert ist, dass sie alle Eingabeelemente (152) adaptiv verschiebt, 252, 253, 254, 352, 353, 354, 355) in der jeweiligen Zeile und/oder Spalte, wenn ein Eingabeelement (152, 252, 253, 254, 352, 353, 354, 355) der jeweiligen Zeile und/oder Spalte in die alternative Position (115, 215, 216, 217, 315, 316, 317, 318) verschoben wird.

14. Schutzeinheit (100, 200) nach einem der vorhergehenden Ansprüche 10 bis 13, wobei für ein Eingabeelement (152, 252, 253, 254, 352, 353, 354, 355) mit einer hohen Anzahl von überwachten Eingängen und ein weiteres Eingabeelement (152, 252, 253, 254, 352, 353, 354, 355) mit einer geringeren Anzahl von überwachten Eingängen ist die Anzeigesteuereinheit (102, 202) so konfiguriert, dass sie die Positionen der beiden Eingabeelemente (152, 252, 253, 254, 352, 353, 354, 355) vertauscht.

15. Schutzeinheit (100, 200) gemäß einem der vorhergehenden Ansprüche 10 bis 14, wobei die Anzeigesteuereinheit (102, 202) für jede Benutzereingabeaktion (103, 203) konfiguriert ist, um den auf die Berührungsplattenvorrichtung (151, 251, 351) ausgeübten Druck zu überwachen und die überwachte Anzahl basierend auf dem ausgeübten Druck zu erhöhen, insbesondere durch Hinzufügen eines Sicherheitswertes zu der überwachten Anzahl, wenn der ausgeübte Druck einer Benutzereingabeaktion (103, 203) höher als ein vorbestimmter Schwellenwert ist; und/oder
wobei die Anzeigesteuereinheit (102, 202) so konfiguriert ist, dass sie die Art der Anwendung analysiert, die auf dem Touchpanel-Gerät (151, 251, 351) angezeigt wird, und die Eingabeelemente (152, 252, 253, 254, 352, 353, 354, 355) entsprechend der erfassten Art der Anwendung bewegt.

## Revendications

1. Méthode de protection pour un dispositif à écran tactile (151, 251, 351), la méthode de protection comprenant
surveiller (S1) un certain nombre d'actions de saisie de l'utilisateur (103, 203) et la taille de la surface (104, 204) des actions de saisie de l'utilisateur (103, 203) pour chaque position sur le dispositif à écran tactile (151, 251, 351), et
déplacer (S2) les éléments d'entrée (152, 252, 253, 254, 352, 353, 354, 355) affichés sur le dispositif à écran tactile (151, 251, 351) de leur position initiale (110, 310, 311, 312, 313) à une position alternative (115, 215, 216, 217, 315, 316, 317, 318) en fonction des nombres et des tailles de surface surveillés (104, 204).

2. Méthode de protection selon la revendication 1, comprenant pour chaque position sur le dispositif à surface tactile (151, 251, 351) la comparaison du nombre surveillé avec une valeur seuil prédéterminée et le déplacement des éléments d'entrée (152, 252, 253, 254, 352, 353, 354, 355) à la position respective vers la position alternative (115, 215, 216, 217, 315, 316, 317, 318) lorsque le nombre surveillé est supérieur à la valeur seuil.

3. Méthode de protection selon l'une des revendications précédentes, dans lequel le décalage (S2) comprend le décalage des éléments d'entrée (152, 252, 253, 254, 352, 353, 354, 355) d'un nombre de pixels qui est au moins aussi grand qu'une moyenne des tailles de la surface surveillée (104, 204) ou qui est au moins aussi grand qu'une taille minimale des tailles de la surface surveillée (104, 204) ou qui est au moins aussi grand qu'une taille maximale des tailles de la surface surveillée (104, 204).

4. Méthode de protection selon l'une des revendications précédentes, comprenant l'augmentation du déplacement entre la position initiale (110, 310, 311, 312, 313) et la position alternative (115, 215, 216, 217, 315, 316, 317, 318) d'un élément d'entrée (152, 252, 253), 254, 352, 353, 354, 355) lorsqu'après avoir déplacé l'élément de saisie respectif (152, 252, 253, 254, 352, 353, 354, 355), au moins certaines des mêmes positions qu'avant le déplacement de l'élément de saisie (152, 252, 253, 254, 352, 353, 354, 355) sont touchées par des actions de saisie de l'utilisateur (103, 203).

5. Méthode de protection selon l'une des revendications précédentes, dans laquelle le déplacement (S2) comprend le décalage de la position alternative (115, 215, 216, 217, 315, 316, 317, 318) d'une distance prédéterminée autour de la position initiale (110, 310, 311, 312, 313) à des intervalles de temps prédéterminés.

6. Méthode de protection selon l'une des revendications précédentes, qui comprend, pour les éléments d'entrée (152, 252, 253, 254, 352, 353, 354, 355) disposés en lignes et/ou en colonnes, le décalage adaptatif de tous les éléments d'entrée (152, 252, 253, 254, 352), 353, 354, 355) dans la ligne et/ou la colonne respective lorsqu'un élément de saisie (152, 252, 253, 254, 352, 353, 354, 355) de la ligne et/ou de la colonne respective est déplacé vers la position alternative (115, 215, 216, 217, 315, 316, 317, 318).

7. Méthode de protection selon l'une des revendications ci-dessus, dans laquelle pour un élément d'entrée (152, 252, 253, 254, 352, 353, 354, 355) ayant un nombre élevé d'entrées surveillées et un autre élément d'entrée (152, 252, 253, 254, 352, 353, 354, 355) ayant un nombre inférieur d'entrées surveillées, le déplacement comprend la modification des positions des deux éléments d'entrée (152, 252, 253, 254, 352, 353, 354, 355).

8. Méthode de protection selon l'une des revendications précédentes, comprenant, pour chaque action d'entrée de l'utilisateur (103, 203), la surveillance de la pression exercée sur le dispositif à écran tactile (151, 251, 351) et l'augmentation du nombre surveillé sur la base de la pression exercée, en particulier dans laquelle une valeur de sécurité est ajoutée au nombre surveillé lorsque la pression exercée d'une action d'entrée de l'utilisateur (103, 203) est supérieure à une valeur seuil prédéterminée.

9. Méthode de protection selon l'une des revendications précédentes, comprenant l'analyse du type d'application affiché sur le dispositif à écran tactile (151, 251, 351) et le déplacement des éléments d'entrée (152, 252, 253, 254, 352, 353, 354, 355) en fonction du type d'application détecté.

10. Unité de protection (100, 200) pour un dispositif à écran tactile (151, 251, 351), dans laquelle l'unité de protection (100, 200) comprend :
une unité de commande de saisie (101, 201) configurée pour surveiller un certain nombre d'actions de saisie de l'utilisateur (103, 203) et les tailles de surface (104, 204) des actions de saisie de l'utilisateur (103, 203) pour chaque position sur le dispositif à écran tactile (151, 251, 351) ; et
une unité de commande d'affichage (102, 202) configurée pour contrôler les éléments d'entrée (152, 252, 253, 254, 352, 353, 354, 355) affichés sur le dispositif à écran tactile (151, 251, 351), est passé de sa position initiale (110, 310, 311, 312, 313) à une position alternative (115, 215, 216, 217, 315, 316, 317, 318) sur la base des nombres et des tailles des surfaces surveillées (104, 204).

11. Unité de protection (100, 200) selon la revendication 10, dans laquelle l'unité de commande d'affichage (102, 202) est configurée pour comparer, pour chaque position sur le dispositif à écran tactile (151, 251, 351), le nombre surveillé avec une valeur de seuil prédéterminée et pour afficher les éléments d'entrée (152, 252, 253, 254, 352, 353, 354, 355) à la position respective est déplacé vers la position alternative (115, 215, 216, 217, 315, 316, 317, 318) si le nombre surveillé est supérieur à la valeur seuil et/ou
dans laquelle, lors du déplacement des éléments d'entrée (152, 252, 253, 254, 352, 353, 354, 355), l'unité de commande d'affichage (102, 202) est configurée pour décaler les éléments d'entrée (152, 252, 253, 254, 352, 353, 354, 355) d'un certain nombre de pixels, qui est au moins aussi grande qu'une moyenne des tailles des surfaces surveillées (104, 204) ou qui est au moins aussi grande qu'une taille minimale des tailles des surfaces surveillées (104, 204) ou qui est au moins aussi grande qu'une taille maximale des tailles des surfaces surveillées (104, 204) ; et/ou
dans laquelle l'unité de commande d'affichage (102, 202) est configurée pour augmenter le déplacement entre la position initiale (110, 310, 311, 312, 313) et la position alternative (115, 215, 216, 217, 315, 316, 317, 318) d'un élément d'entrée (152, 252, 253, 254, 352), 353, 354, 355) lorsque, après avoir déplacé l'élément de saisie respectif (152, 252, 253, 254, 352, 353, 354, 355), au moins certaines des mêmes positions qu'avant le déplacement de l'élément de saisie (152, 252, 253, 254, 352, 353, 354, 355) sont prises par des actions de saisie de l'utilisateur (103, 203).

12. Unité de protection (100, 200) selon l'une quelconque des revendications précédentes 10 et 11, dans laquelle, lors du déplacement d'éléments d'entrée (152, 252, 253, 254, 352, 353, 354, 355), l'unité de commande d'affichage (102, 202) est configurée pour déplacer la position alternative (115, 215, 216, 217, 315, 316, 317, 318) d'une distance prédéterminée autour de la position d'origine (110, 310, 311, 312, 313) à des intervalles de temps prédéterminés.

13. Unité de protection (100, 200) selon l'une des revendications 10 à 12 précédentes, dans laquelle pour les éléments d'entrée (152, 252, 253, 254, 352, 353, 354, 355) disposés en lignes et/ou en colonnes, l'unité de commande d'affichage (102, 202) est configurée pour décaler de manière adaptative tous les éléments d'entrée (152), 252, 253, 254, 352, 353, 354, 355) dans la ligne et/ou la colonne respective lorsqu'un élément de saisie (152, 252, 253, 254, 352, 353, 354, 355) de la ligne et/ou de la colonne respective est déplacé vers la position alternative (115, 215, 216, 217, 315, 316, 317, 318).

14. Unité de protection (100, 200) selon l'une des revendications 10 à 13 précédentes, dans laquelle pour un élément d'entrée (152, 252, 253, 254, 352, 353, 354, 355) ayant un nombre élevé d'entrées surveillées et un autre élément d'entrée (152, 252, 253), 254, 352, 353, 354, 355) avec un nombre réduit d'entrées surveillées, l'unité de commande d'affichage (102, 202) est configurée pour échanger les positions des deux éléments d'entrée (152, 252, 253, 254, 352, 353, 354, 355).

15. Unité de protection (100, 200) selon l'une quelconque des revendications 10 à 14 ci-dessus, dans laquelle l'unité de commande d'affichage (102, 202) est configurée pour chaque action d'entrée de l'utilisateur (103, 203) afin de surveiller la pression appliquée au dispositif de plaque tactile (151, 251, 351) et d'augmenter le nombre surveillé sur la base de la pression appliquée, en particulier en ajoutant une valeur de sécurité au nombre surveillé si la pression appliquée d'une action d'entrée de l'utilisateur (103, 203) est supérieure à une valeur de seuil prédéterminée ; et/ou
dans laquelle l'unité de commande d'affichage (102, 202) est configurée pour analyser le type d'application affiché sur le dispositif à écran tactile (151, 251, 351) et déplacer les éléments d'entrée (152, 252, 253, 254, 352, 353, 354, 355) en fonction du type d'application détecté.
